# EUROPÄISCHE PATENTSCHRIFT

(11) **EP 3 457 040 B1**
(45) Veröffentlichungstag und Bekanntmachung des Hinweises auf die Patenterteilung: **02.12.2020**
(21) Anmeldenummer: 17191240.5
(22) Anmeldetag: 15.09.2017
(51) Int. Cl.: F24F 3/16, F24F 13/32, F24F 1/0071

(54) **PERSONALISIERTE LUFTREINIGUNGSVORRICHTUNG MIT EINEM STÄNDER**
PERSONALISED AIR PURIFICATION DEVICE WITH A STAND
DISPOSITIF DE PURIFICATION DE L'AIR PERSONNALISÉ POURVU D'UN SUPPORT

(43) Veröffentlichungstag der Anmeldung: 20.03.2019
(73) Patentinhaber: IQAir AG, 9403 Goldach (CH)
(72) Erfinder: Hammes, Frank, 9403 Horn (CH); Susana, Christian, 6833 Fraxern (AT); Steinlein, Christoph, 8590 Romanshorn (CH)
(74) Vertreter: Riebling, Peter

(56) Entgegenhaltungen:
- DE-U1-202009 001 190
- US-A1- 2005 279 905
- US-A1- 2007 018 415

## Beschreibung

Die Erfindung betrifft eine personalisierte Luftreinigungsvorrichtung nach dem Oberbegriff des Patentanspruches 1.

Besonders sensitive Personen, die viel Zeit an einem Platz in Großraumbüros und in anderen Räumen verbringen, haben vermehrt das Bedürfnis, Luft zu atmen, die gereinigt ist und/oder beduftet sein kann.

Es besteht daher ein Bedürfnis, die Luft in Räumen noch zusätzlich zu reinigen und/oder zu beduften und jeweils einem Benutzer personalisiert zuzuführen. Dies auch deshalb, weil Klimaanlagen keine völlige Allergiefreiheit (Freiheit von Blüten- und Gräserpollen) und Geruchsfreiheit der zugeführten Raumluft erreichen können. Des Weiteren deshalb, weil Raumluftreiniger, sofern vorhanden, nicht die gesamte Raumluft in einem Raum, aufgrund ständig aktiver Luftverschmutzungsquellen, vollständig reinigen können.

Mit dem Gegenstand der US 9,375,547 B2 und US 9,144,697 B2 gab es Versuche, gereinigte oder in anderer Weise aufbereitete Raumluft individualisiert einem Benutzer zuzuführen. Nachteil der dort beschriebenen Anordnung ist, dass die Luftzuführung in der Art einer Frisierhaube stattfindet, d. h. der Benutzer muss sich unterhalb - oder sogar innerhalb - einer Lufthutze befinden, die einen gegen den Kopf des Benutzers gerichteten Luftausblasstrahl erzeugt. Die Luftreinigungsvorrichtung war im Übrigen als groß dimensioniertes Bodengerät ausgebildet.

Aus der US 8,414,671 B2 ist es ferner bekannt, den Kopf des Benutzers in einem kastenförmigen Gerät zu lagern, um gezielt dem Benutzer einen auf ihn abgestimmten, gereinigten Luftstrom zuzuführen.

Nachteil der genannten Druckschriften ist die Notwendigkeit der Aufstellung von platzgreifenden Bodengeräten, die schwer und unhandlich sind und den Benutzer möglicherweise in seiner Bewegungsfreiheit einschränken. Weiterer Nachteil ist die schwierige Handhabung, denn die gereinigte Luft wird von einem auf den Boden aufgestellten Gerät erzeugt, welches über einen relativ langen Schlauch mit der Luftzuführungshutze verbunden ist. Die Luftführung über einen Schlauch ist jedoch mit zusätzlichen Geräuschen und einem erhöhten Strömungswiderstand verbunden.

Weiterer Nachteil dieser bekannten Technik ist, dass sich im Gerät selbst und in dem langen Luftzuführungsschlauch Schmutzteile und Bakterien absetzen können, die zu einer Verkeimung der zugeführten Luft führen.

Die DE 20 2009 001 190 U1 zeigt eine Luftreinigungsvorrichtung mit einem Gehäuse, welches zumindest einen Lufteinsaugbereich zum Einsaugen von Luft in das Gehäuse und zumindest einen Luftausblasbereich zum Ausblasen der gereinigten Luft aus dem Gehäuse mittels eines Gebläses aufweist, wobei ein durch einen Filter gereinigter Ausblasluftstrom gegen den Körper eines Benutzers gerichtet ist, wobei das Gehäuse der Luftreinigungsvorrichtung mit einer Gehäuseschale seitlich mit einem Ständer über eine Schraubverbindung verbunden ist. Damit offenbart die DE 20 2009 001 190 U1 eine Luftreinigungsvorrichtung mit den Merkmalen des Oberbegriffs von Anspruch 1.

Nachteilig an dieser Vorrichtung ist es, dass der der Widerstand gegen Verdrehung des Gehäuses gegenüber dem Halter durch den Benutzer nicht komfortabel einstellbar ist. Eine derartige Anpassung ist nur durch die Verwendung eines Werkzeuges möglich.

Die US 2005/279905 A1 zeigt eine Luftreinigungsvorrichtung bestehend aus einem Gehäuse und einem Ständer, wobei der Ständer werkzeuglos mit dem Gehäuse verbunden wird. Dazu wird zunächst die Grundplatte mit einem Halter verbunden und in einem nächsten Schritt wird der Halter über einen Bajonett-Rastverschluss mit dem Gehäuse verbunden.

Somit wird lediglich die bodenseitige Grundplatte mit Hilfe der Einrastverbindung mit der Unterseite des Gehäuses verbunden, wodurch die Vorrichtung aber nicht um eine horizontale Achse gedreht werden kann.

Der Erfindung liegt deshalb die Aufgabe zugrunde, eine personalisierte Luftreinigungsvorrichtung der eingangs genannten Art so weiter zu bilden, dass eine leichte Handhabbarkeit des Gerätes, bei verringerter Stellfläche und eine verbesserte Betriebssicherheit bei verbesserten hygienischen Bedingungen gewährleistet sind.

Zur Lösung der gestellten Aufgabe wird erfindungsgemäß eine Luftreinigungsvorrichtung mit den Merkmalen des Anspruchs 1 vorgeschlagen. Bevorzugte Ausführungsformen sind in den abhängigen Ansprüchen definiert.

In einer bevorzugten Ausführungsform der Erfindung ist die Luftreinigungsvorrichtung als Tischgerät ausgebildet und am Gehäuse ist ein Ständer lösbar befestigt.

Die genannte Merkmalskombination ist mit dem Vorteil verbunden, dass das Gehäuse des Luftreinigers nunmehr vergleichsweise klein ausgebildet ist, so dass es als Tischgerät geeignet ist und damit erstmals die Möglichkeit besteht, einen solche Luftreiniger auf einem Tisch aufzustellen, ohne lange Ausblasschläuche verwenden zu müssen, die einer Verkeimungsgefahr unterliegen und einen zusätzlichen Strömungswiderstand für das Gebläse bilden.

Die bekannten Geräte mussten deshalb bei gleicher Luftleistung und bei vergleichbarer Filterleistung entweder größer dimensioniert werden, was eine Aufstellung auf einem Tisch verhinderte oder mit einer größeren elektrischen Leistung ausgerüstet werden, was ebenfalls im Hinblick auf die dann notwendigen Gehäuseabmessungen den Einsatz als Tischgerät verhinderte.

Diese Nachteile werden mit dem erfindungsgemäßen Luftreiniger vermieden, der in seiner Größe mit einer Wurfscheibe (Frisbee oder Diskus) vergleichbar ist, wie sie als Wurfgerät im Sport verwendet wird.

Kennzeichnend für diese Form ist, dass die Luftaufbereitung und Luftabgabe in einem relativ kleinen, rotationssymmetrischen Gehäuse stattfindet, so dass sich erstmals die Möglichkeit bietet, eine solche Luftreinigungsvorrichtung als Tischgerät auszubilden und mit einem leichtgewichtigen Ständer auf einem Tisch aufzustellen.

Somit wird ein leicht handhabbares Gerät mit extrem verkürzten Luftführungskanälen beschrieben, denn nach einem Merkmal eines Unteranspruches befinden sich der Lufteinsaugbereich und der Luftausblasbereich in der gleichen radialen Ebene am äußeren Umfang des Gehäuses, was mit dem Vorteil verbunden ist, dass eine sehr geringe Baubreite (Höhe = Dicke der Diskusscheibe) erreicht werden kann.

Der Mittenquerbereich des etwa scheibenförmigen Gehäusekörpers spannt eine radiale, vertikale Ebene auf, die sich vom Mittelpunkt des Gerätes radial nach außen in Richtung zum Außenumfang erstreckt. In dieser radialen Ebene sind nun sowohl der Lufteinsaugbereich als auch der Luftausblasbereich fluchtend und ohne axialen Versatz am Außenumfang des Gehäuses angeordnet, was zu einer geringen Baubreite führt.

Dadurch werden die geringen Abmessungen des Luftreinigers erzielt, was seinen Einsatz als Tischgerät möglich macht, weil auf geringsten Bauraum eine hohe Luftleistung mit überlegener Filterwirkung erzielt werden kann.

Von besonderem Vorteil ist, wenn der Lufteinsaugbereich und der Luftausblasbereich, von der Ventilatorrotationsachse aus gesehen, am radial äußeren Rand des Gehäuses angeordnet sind. Damit ergibt sich die Möglichkeit, dass der Lufteinsaugbereich und der Luftausblasbereich im Bereich einer im Mittenbereich des Gehäuses am Außenumfang angeordneten, umlaufenden Ringnut angeordnet sind, was die Bauhöhe (=Scheibendicke) weiter reduziert.

Durch das Anordnen des Ventilatorrades in einem vom Einsaugluftfilter teilweise umgebenen Innenraum und damit teilweise innerhalb des Einsaugluftfilters wird eine sehr kompakte Bauweise der Luftreinigungsvorrichtung möglich. Hierdurch können sehr einfach transportable und auch vielseitig einsetzbare Luftreinigungsvorrichtungen geschaffen werden. Damit ist es möglich, eine solche Luftreinigungsvorrichtung als Tischgerät auszubilden, was vorher nicht möglich war.

In einer Weiterbildung ist vorgesehen, dass die gehäuseseitige Kupplung des Ständers im Bereich der zentrischen Mittenachse einer der beiden Gehäuseschalen des Gehäuses erfolgt.

Erfindungsgemäß ist vorgesehen, dass über den Ständer eine Stromzuführung in das Gehäuse erfolgt, wobei bevorzugt ein Niederstrom über einen ständerseitigen Fuß in die Kupplung des Ständers an die Gehäuseschale des Gehäuses erfolgt.

In einer bevorzugten Ausgestaltung ist deshalb der gehäuseseitige Anschluss des Ständers in das Gehäuse der Luftreinigungsvorrichtung als mehrpolige Klinkensteckverbindung ausgebildet, und ein Niederstrom wird über ein Stromkabel auf eine ständerseitige Klinkenbuchse in einem fest mit dem Ständer verbundenen Rastdeckel geführt. Die Klinkenbuchse ist mit einem fest in dem Gehäuse der Luftreinigungsvorrichtung angeordneten Klinkenstecker verrastbar, sodass ein zwei- oder mehrpoliger Anschluss über die besagte Klinken-Stecker-Verbindung verwirklicht ist, die bevorzugt im zentrischen Mittenbereich der Gehäuseschale erfolgt, in der auch die Rotationsachse des Ventilators angeordnet ist.

Weil der Ventilator im Wesentlichen den Schwerpunkt des Gehäuses bestimmt, ist es aus Stabilitäts- und Gleichgewichtsgründen günstig, die elektrische und mechanische Kupplung zwischen dem Ständer und der Gehäuseschale in diesem Bereich anzuordnen.

Erfindungsgemäß ist die elektrische Verbindung zwischen dem Ständer und dem Gehäuse als Rotationsstromverbinder und die mechanische Verbindung als Rastverbindung ausgebildet, was bedeutet, dass ein ständerseitiger Rastdeckel in der Art einer Steck-Rast-Verbindung mit einer gehäuseseitig festen Rasthülse verrastbar ist.

Zur Herstellung der Verrastung wird ein axial verlängertes Hülsenteil des ständerseitigen Rastdeckels mit daran angeformten radial federnden Rastklinken in einer leicht schrägen Lage zur Vertikalen in die zugeordnete Ringaufnahme der gehäuseseitigen Rasthülse eingesetzt und dann aus seiner Schräglage in eine vertikale Lage gekippt, sodass die radial federnden Rastklinken in hinterschnittene Rastausnehmungen am Umfangsrand der gehäuseseitigen Ringaufnahme rastend eingreifen.

Statt einer solchen aufsteckbaren, nicht durch Drehung erzielbaren Rastverbindung, kann auch eine einrastbare Bajonett-Drehverbindung verwirklicht werden.

In Beispielen, die nicht zur Erfindung gehören sind auch andere lösbare mechanische Kupplungsverbindungen möglich, wie z.B. Keilverbindungen, Schraubverbindungen, Exzenter-Keilverbindungen oder Magnethaftverbindungen.

Neben der Anordnung einer ständerseitigen Klinkenbuchse in Verbindung mit einem gehäuseseitigen Klinkenstecker ist es nach einer analogen Umkehrung auch möglich, im Ständer den Klinkenstecker und im Gehäuse die Klinkenbuchse anzuordnen.

Die Anordnung einer Klinken-Stecker-Verbindung hat den Vorteil, dass die Ineinandergreifenden Kontaktteile leicht drehbar zueinander ausgebildet sind.

Somit gibt es bei der Herstellung der mechanischen Kupplung keine Verkantung der ineinander greifenden elektrischen Kontaktteile, weil diese gegeneinander verdrehbar sind.

In einer bevorzugten Ausgestaltung erfolgt die Stromzuführung über ein Stromkabel in Form eines Niederstroms mit einer Spannung von z.B. 12 Volt - 24 Volt und einem Strom von z.B. 1 - 2 Ampere über einen einarmigen Fuß des Ständers. Das Kabel hat dabei lediglich einen Durchmesser von z.B. 2 mm - 4 mm und kann deshalb leicht in einem Kabelkanal des Ständerfußes verlegt werden, um so eine elektrisch leitfähige Verbindung mit der ständerseitigen Klinkenbuchse zu ermöglichen.

Zu diesem Zweck ist vorgesehen, dass im Ständer, der bevorzugt in der Rotationsachse des Ventilators an der Seitenfläche des Gehäuses angreift, auch die Stromzuführung für den gehäuseseitigen Ventilator und die übrige Elektronik angeordnet ist, sodass das Gehäuse selbst kabellos ist und über den ständerseitigen Rotationsstromverbinder mit Strom versorgt wird. Dadurch wird auch die im Innenraum des Gehäuses verlegte Stromzuführung zum Ventilator besonders kurz und spart Gewicht.

Der Aspekt der vertikalen Drehbarkeit der personalisierten Luftreinigungsvorrichtung hat den Vorteil, dass zwei Personen unterschiedlicher Größe an einem Arbeitsplatz arbeiten können und das Größenverhältnis der Person zum Luftreiniger auf einem Tisch veränderbar ist.

Bei einer größeren Person ergibt sich ein steilerer Winkel des Ausblasstutzens. Auf einem Nachttisch, bei dem das Bett und der Kopf des Schlafenden niedriger angeordnet sind, würde sich ein sehr flacher oder sogar zum Boden geneigter Ausblasstutzen ergeben.

Der Aspekt der schnellen werkzeuglosen Einhängung des Luftreinigers am Ständer und die ebenfalls einfache Abnehmbarkeit sind ein weiterer Vorteil der Erfindung. Somit kann der gleiche Luftreiniger vom Nutzer an einem anderen Ort mit lediglich einer weiteren oder anderen Aufnahme eingesetzt werden.

Ebenfalls kann der Luftreiniger z.B. in einem Büro einfach bei Abwesenheit an einem sicheren Ort gegen Diebstahl geschützt werden.

Der erfindungsgemäße Luftreiniger ist nicht nur zur personalisierten Luftzuführung für einen einzelnen Nutzer in Form eines Tischgerätes mit einem dafür nutzbaren Ständer geeignet. In einer größeren Gehäuseabmessung, die bis zu einem Durchmesser von 100 cm betragen kann, kann der gleiche Ständer - oder eine größere Dimension des gleichen Ständers auch als Bodenraumluftreiniger genutzt werden. Auch in diesen Anwendungsfällen ist die leicht bedienbare Kupplung zwischen dem Gehäuse des Luftreinigers und dem zugeordneten Ständer besonders vorteilhaft.

Es zeigen:
Figur 1: eine perspektivische Ansicht einer Luftreinigungsvorrichtung mit einem Tischständer
Figur 2: die Stirnansicht der Anordnung nach Figur 1
Figur 3: die Seitenansicht des Luftreinigers mit abgenommenem Ständer
Figur 4: die Seitenansicht des Luftreinigers mit aufgerastetem Ständer
Figur 5: die Seitenansicht des Luftreinigers mit Darstellung der Schnittführung A-A in Figur 6 und 7
Figur 6: Schnitt gem. A-A in Figur 5 bei eingerastetem Ständer
Figur 7: Schnitt gem. A-A in Figur 5 bei abgenommenem Ständer
Figur 8: die Seitenansicht des Luftreinigers mit Darstellung der Schnittführung B-B in Figur 9 und 10
Figur 9: Schnitt gem. B-B in Figur 8 bei eingerastetem Ständer
Figur 10: Schnitt gem. B-B in Figur 8 bei abgenommenem Ständer
Figur 11: die perspektivische Darstellung des Luftreinigers bei angenommenem Ständer
Figur 12: eine weitere perspektivische Darstellung des Luftreinigers bei angenommenem Ständer
Figur 13: die gleiche Darstellung wie in Figur 12 bei teilweise entfernter Stromzuführung

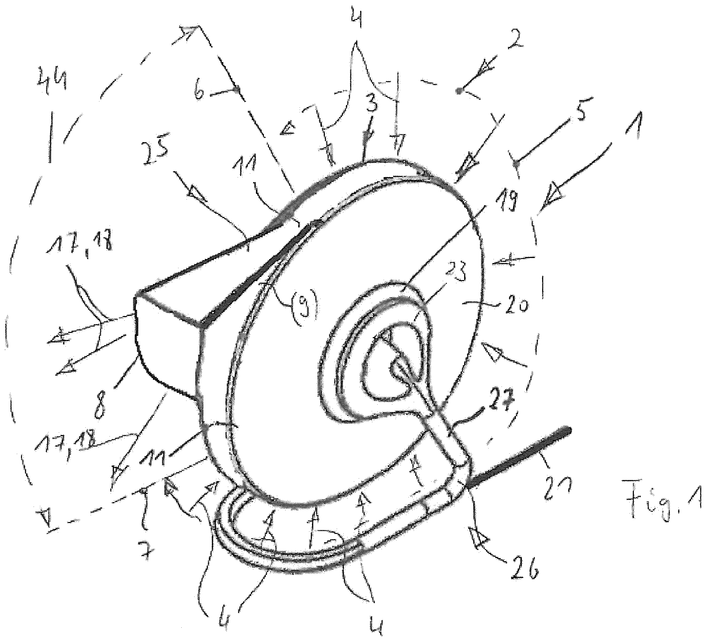

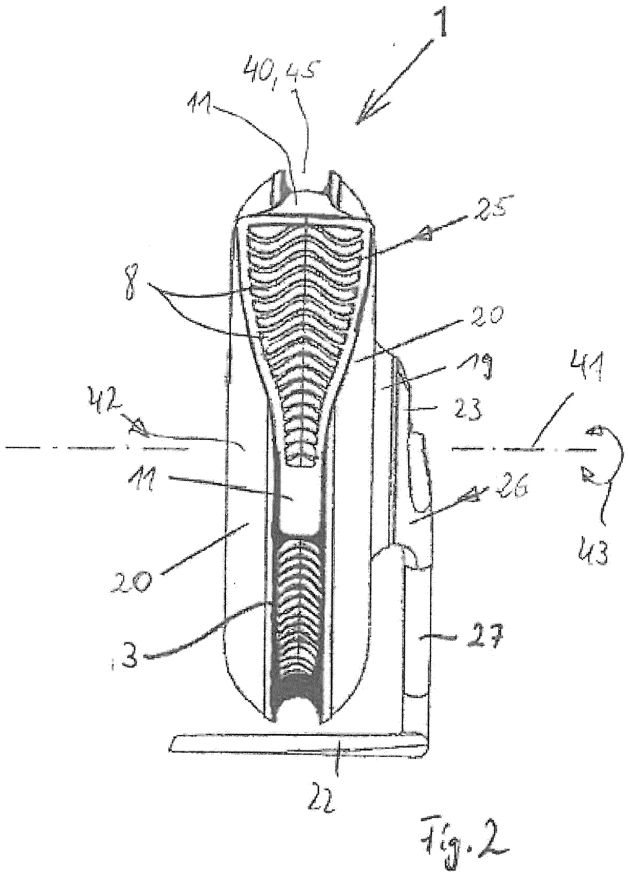

In Figur 1 und 2 ist ein Luftreiniger 1 dargestellt, der im Wesentlichen aus einem scheibenförmigen Gehäuse 42 besteht, bei welchem die Ansaugluft 2 über den in gestrichelten Linien eingezeichneten Lufteinsaugbereich 5 über radial am Außenumfang angeordneten Ansauglamellen 3 in den Innenraum eingesaugt wird.

Die Ansaugluft 2 wird also in radialer Richtung, in Pfeilrichtung 4 über einen sich im Bereich von 270- 300 Grad erstreckenden Umfangsbereich in das Gerät eingesaugt. Dementsprechend kann das im Innenraum des Gehäuses angeordnete Faltenfilter C-förmig ausgebildet sein und sich über den gesamten Umfangsbereich von 270 bis 300 Grad erstrecken, was eine hohe Filterleistung bewirkt.

Der Umfangsbereich für die Lufteinsaugung erstreckt sich von Position 6 zu Position 7.

Das etwa scheibenförmige Gehäuse 42 besteht im Übrigen aus zwei gegeneinander gerichteten, kreisförmigen, rotationssymmetrischen Gehäuseschalen 20, die gemäß Figur 2 leicht gewölbt sind und im Bereich einer umlaufenden Ringnut 40 den Lufteinsaugbereich 5, sowie den Luftausblasbereich 44 in einer gleichen radialen Ebene ausbilden.

Die Anordnung des Lufteinsaugbereiches 5 und des Luftausblasbereiches 44 im Bereich einer vertieft angeordneten Ringnut 40 ergibt die Möglichkeit, dass das Ausblasteil 25 mit seinen Seitenwänden direkt auf die Wandungen der Ringnut 40 auf das Gehäuse abgedichtet aufgesetzt werden kann.

Der Luftausblasbereich 44 erstreckt sich demzufolge in einem Winkelbereich von bevorzugt 60- 90 Grad von Position 6 zu Position 7 und in diesem Luftausblasbereich 44 ist das halboffene Ausblasteil 25 angeordnet, welches im Wesentlichen aus zwei zueinander parallelen Seitenwänden besteht, die durch eine Deckwand miteinander verbunden sind. Das Ausblasteil wird mit einer nicht näher dargestellten Steckbefestigung 9 auf den gehäuseseitigen, sich am Umfangsbereich des Gehäuses erstreckenden Ausblaslamellen aufgesteckt.

Der gegenüberliegend zur Deckwand angeordnete Bereich ist offen, sodass der aus dem gehäuseseitigen Ausblaslamellen im Bereich des Luftausblasbereiches 44 ausgeblasene Luftstrom im Ausblasteil 25 konzentriert und durch stirnseitig angeordnete Ausblaslamellen 8 in Pfeilrichtung 18 als Ausblasluftstrom 17 abgegeben wird.

Der Ausblasluftstrom 17 hat eine so geringe Luftgeschwindigkeit, dass er vom Benutzer nicht bemerkt wird, weil er wie ein das Gesicht des Benutzers sanft umströmender Luftschleier wirkt.

Aus Figur 2 ergibt sich, dass das Gehäuse 42 eine horizontale Mittenquerachse 41 aufweist, die mit der Rotationsachse des im Innenraum angeordneten Radialventilators übereinstimmt.

Im Bereich dieser Mittenquerachse 41 erfolgt die mechanische und elektrische Kupplung mit dem Ständer 26.

Der über das Stromkabel 21 in den Ständer 26 eingeleitete Niederstrom wird über den vertikalen Arm 21 in einen ständerseitigen Rastdeckel 23 eingeleitet, in dessen zentralen Mittenbereich ein mindestens zweipoliger Klinkenstecker angeordnet ist, der in eine gegenüberliegende Klinkenbuchse drehbar einrastbar ist, die im Bereich einer gehäuseseitigen Rasthülse 19 angeordnet ist.

Der Ständer 26 kann verschiedene Ausführungsformen von Standfüßen 22 aufweisen.

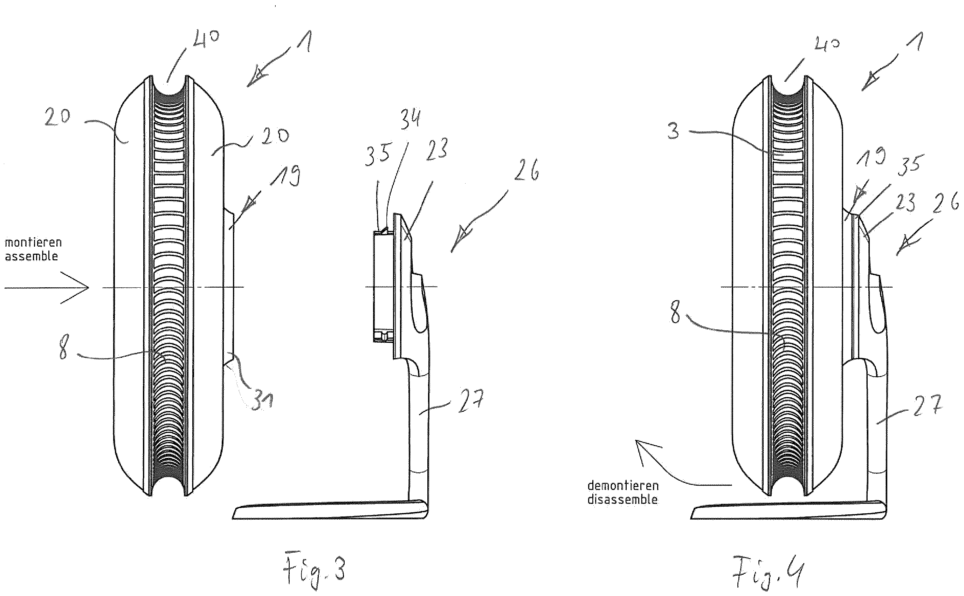

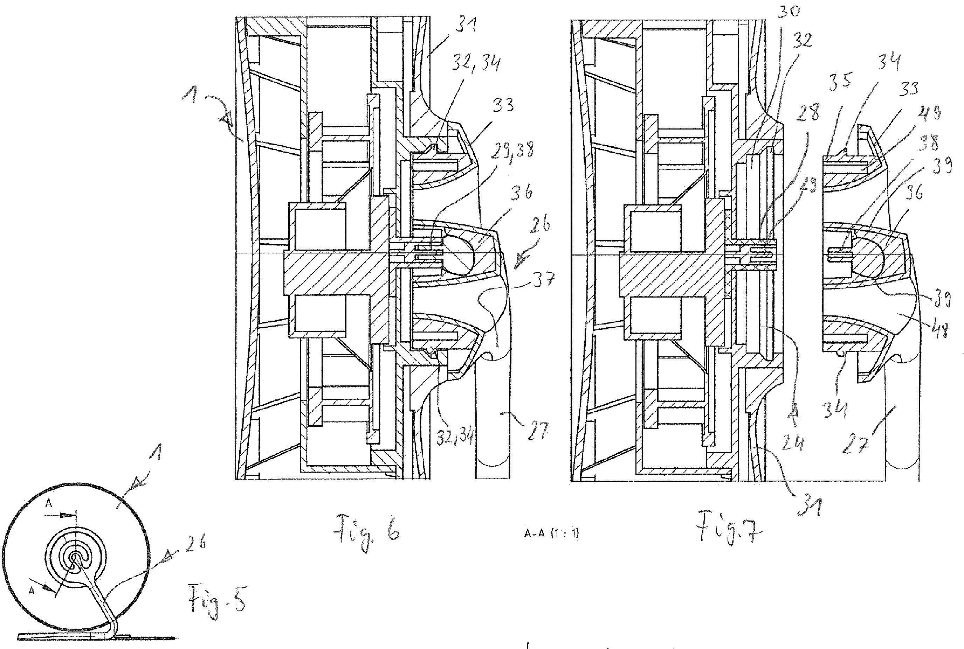

Im gezeigten Ausführungsbeispiel in den Figuren 3 und 4 ist die Rasthülse 19 drehfest mit der einen Gehäuseschale 20 verbunden, die im Wesentlichen aus einem äußeren, umlaufenden Ring 31 besteht, der radial einwärts mit einer zentralen Ringhülse 30 verbunden ist, in der eine axial vertiefte Ringaufnahme 24 (siehe Figur 7, 10, 11) ausgebildet ist.

Am Innenumfang der Ringaufnahme 24 ist eine als umlaufende Ringnut ausgebildete, hinterschnittene Rastausnehmung 32 angeformt, in welche die am gegenüberliegenden ständerseitigen Rastdeckel 23 angeformten Rastklinken 34 unter Federvorspannung rastend eingreifen.

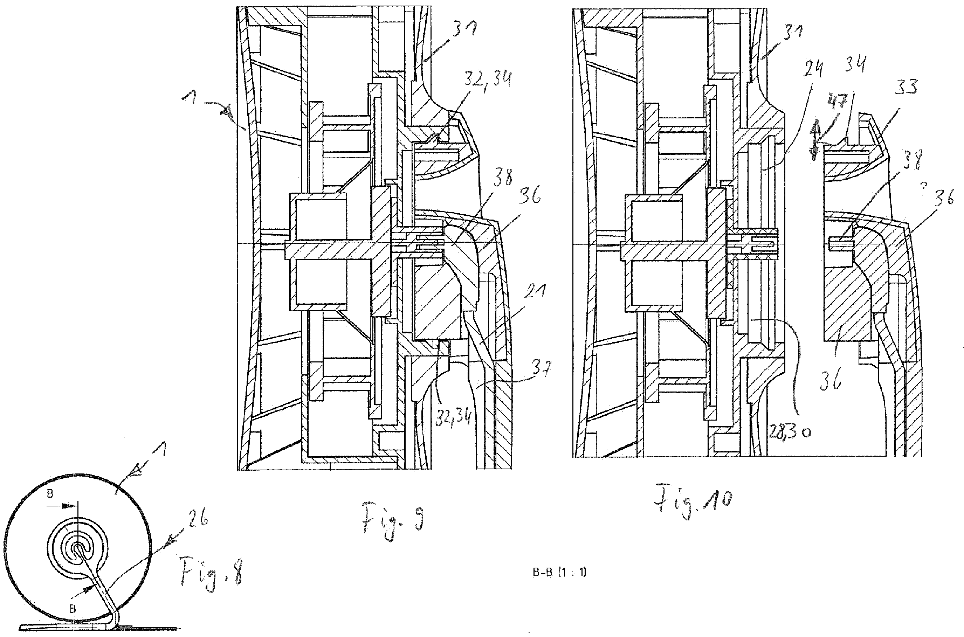

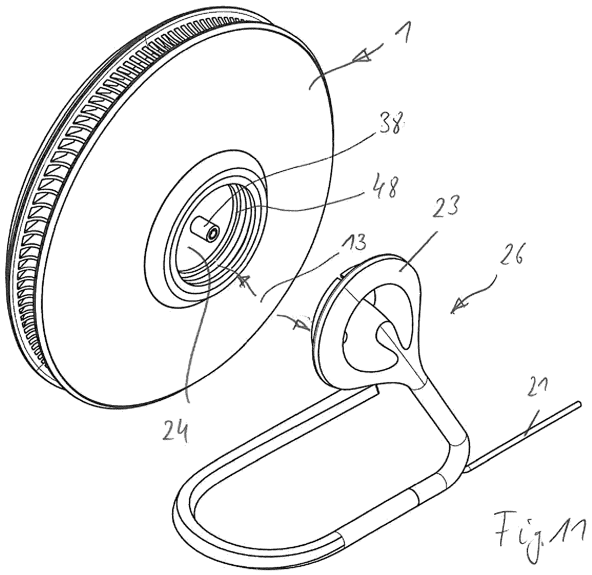

Diese Rastverbindung 13 (siehe Fig.11) ist in eingeklinktem Zustand in den Figuren 6 und 9 dargestellt. Der gelöste Zustand der Rastverbindung 13 ergibt sich aus den Figuren 7, 10, 11, 12, 13).

Im Bodenbereich der gehäuseseitigen Ringhülse 30 ist in einer zentralen, freigestellten Ausnehmung 28 ein Klinkenstecker 29 angeordnet.

Er besteht in an sich bekannter Weise aus einer äußeren Buchse, die elektrisch isoliert von dem mittigen, zentrischen (zweipoligen) Steckerstift ausgebildet ist.

Der Klinkenstecker 29 befindet sich zentrisch in der Mittenquerachse 41 des Gehäuses 42 gemäß Figur 2.

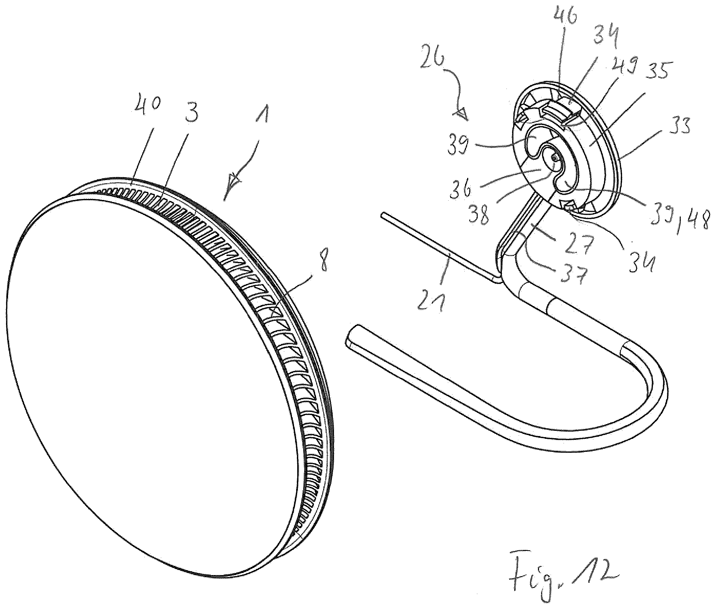

In den Figuren 3, 4, sowie den Figuren 6, 7 und 9, 10 ist dargestellt, dass der Ständer 26 im Wesentlichen aus einem in horizontaler Richtung ausgerichteten Rastdeckel 23 besteht, der ein flaches Deckelteil 33 ausbildet an dem ein axial verlängertes Hülsenteil 35 angeformt ist, an dessen Außenumfang die in Pfeifrichtung 47 radial federnden Rastklinken 34 (siehe Figur 10) angeformt sind. Jede Rastklinke weist eine radiale Rastkante 46 auf (siehe Figur 12).

Die Rastkanten 46 untergreifen die in Figur 6, 7, 9, 10 dargestellten hinterschnittene Rastausnehmung 32, wenn der ständerseitige Rastdeckel 23 in einer leicht zur Vertikalen geneigten Stellung mit seinem Hülsenteil 35 in die zentrale Ringaufnahme 24 der gehäuseseitigen Rasthülse 19 eingeführt wird. Beim Zurückschwenken des ständerseitigen Rastdeckels 23 in die vertikale Lage kommen somit die beiden Rastklinken 34 zum Einrasten in die hinterschnittenen Rastausnehmung 32. Somit ist neben der mechanischen Kupplung auch gleichzeitig die elektrische Verbindung hergestellt.

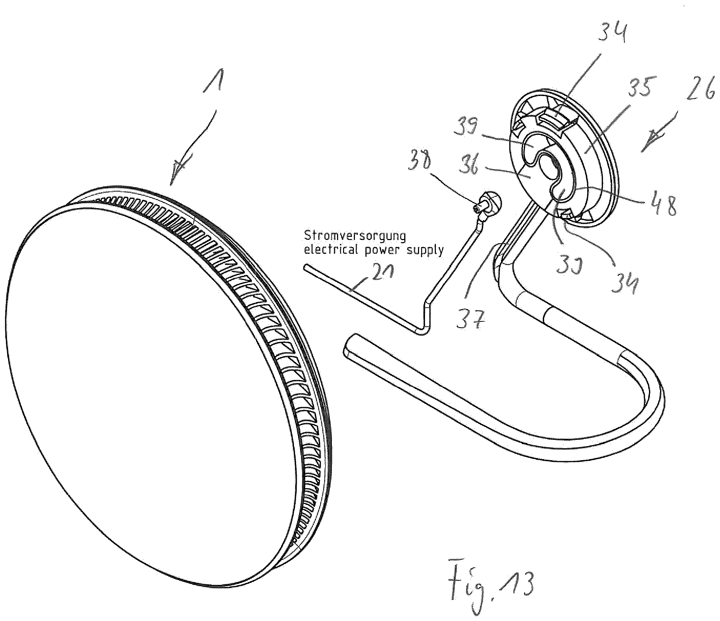

Im ständerseitigen Hülsenteil 35 ist eine lyraförmige Ausnehmung 48 (siehe Figur 12 und 13) ausgebildet, die von einer formangepassten, profilierten Profilfeder 39 ausgefüllt ist. Im Innenraum der Profilfeder ist ein Isolierteil 36 aufgenommen, in dessen Zentrum die Klinkenbuchse 38 angeordnet ist.

Durch die federnde Befestigung des Isolierteils 36 in der lyraförmigen Profilfeder 39 ergibt sich eine schwimmenden Lagerung der Steckverbindung zwischen Ständer 26 und Luftreiniger 1 und damit eine automatische Zentrierung zwischen der Klinkenbuchse 38 und dem ständerseitigen Klinkenstecker 29 bei Herstellung der elektrischen Steckverbindung zwischen diesen Teilen, weil sich das Isolierteil 36 beim Herstellen der Rastverbindung zwischen der gehäuseseitigen Rasthülse 19 und dem ständerseitigen Rastdeckel 23 in radialer und auch in axialer Richtung bewegen kann und somit einen Verkantungsausgleich für die zu kuppelnde Stecker-Klinken-Verbindung 29, 38 bildet.

Wie aus Figur 12 und 13 entnehmbar mündet in das Isolierteil 36 ein Kabelkanal 37 der einseitig offen im Arm 27 des Ständers 26 eingeformt ist. Im Kabelkanal 37 ist das Stromkabel 21 verlegt.

Statt der Ausbildung eines einarmigen Ständers 26 als Tischständer kann dieser auch als Wandhalter oder als Autohalterung zur Befestigung an den Kopfstützen der Vordersitze eines Kraftfahrzeuges verwendet werden, um eine Belüftung der auf den Hintersitzen sitzenden Personen zu ermöglichen. Auch hier werden die gleichen konstruktiven Merkmale der mechanischen und der gleichzeitigen elektrischen Kupplung verwirklicht.

Die Erfindung betrifft somit eine lösbare Rastverbindung zwischen der Seitenfläche eines etwa rotationssymmetrisch ausgebildeten Gehäuses eines Luftreinigers 1 mit einem seitlich daran leicht lösbar angekuppelten Ständer 26.

Statt der gezeigten Rastverbindung 13 können auch andere leichtlösbare Verbindungen verwendet werden, die neben der mechanischen Kupplung gleichzeitig auch die elektrische Verbindung verwirklichen Solche weiteren lösbaren Verbindungen sind Bajonett-Steck-Drehverbindungen.

### Zeichnungslegende

1. Luftreiniger
2 Ansaugluft
3 Ansauglamelle
4 Pfeilrichtung
5 Lufteinsaugbereich
6 Position
7 Position
8 Ausblaslamellen
9 Steckbefestigung
11 Anschlaglappen
17 Ausblasluftstrom
18 Pfeilrichtung
19 Rasthülse
20 Gehäuseschale
21 Stromkabel
22 Standfuß
23 Rastdeckel
24 Ringaufnahme
25 Ausblasteil
26 Ständer
27 Arm
28 Ausnehmung (von 19)
29 Klinkenstecker
30 Ringhülse
31 Rastring
32 Rastausnehmung
33 Deckelteil (von 23)
34 Rastklinke
35 Hülsenteil
36 Isolierteil
37 Kabelkanal
38 Klinkenbuchse
39 Profilfeder
40 Ringnut
41 Drehachse
42 Gehäuse (von 1)
43 Pfeilrichtung
44 Luftausblasbereich
45 radiale Ebene
46 Rastkante
47 Pfeilrichtung
48 Ausnehmung (von 39)
49 Ausnehmung (von 23)

## Patentansprüche

1. Luftreinigungsvorrichtung (1) zur, personalisierten Zuführung von Luft an einen einzelnen Benutzer mit einem Gehäuse (42), welches zumindest einen Lufteinsaugbereich (5) zum Einsaugen von Luft in das Gehäuse (42) und zumindest einen Luftausblasbereich (44) zum Ausblasen der gereinigten Luft aus dem Gehäuse (42) mittels eines Gebläses aufweist, wobei ein durch einen Filter gereinigter Ausblasluftstrom (17) gegen den Körper und insbesondere gegen das Gesicht eines Benutzers gerichtet ist, wobei die Luftreinigungsvorrichtung (1) als Tischgerät oder als Bodengerät oder als Wandgerät ausgebildet ist und dass das Gehäuse (42) mit einer Gehäuseschale (20) seitlich mit einem Ständer (26) gekuppelt ist, **dadurch gekennzeichnet, dass** zur mechanischen, werkzeuglosen Verbindung von Ständer (26) und Gehäuse (42) eine gehäuseseitige Rasthülse (19) mit einem ständerseitigen Rastdeckel (23) verrastet ist und dass zur elektrischen Verbindung zwischen Ständer und Gehäuse ein Rotationsstromverbinder konzentrisch zur Rasthülse (19) angeordnet ist, der das Gehäuse mit Strom versorgt.

2. Luftreinigungsvorrichtung (1) nach Anspruch 1, **dadurch gekennzeichnet, dass** das Gehäuse (42) rotationssymmetrisch ist und aus zwei Gehäuseschalen (20) besteht und dass der gehäuseseitige Anschluss des Ständers (26) im Bereich einer zentrischen Mittenachse einer der beiden Gehäuseschalen (20) des Gehäuses (42) erfolgt.

3. Luftreinigungsvorrichtung (1) nach einem der Ansprüche 1 oder 2, **dadurch gekennzeichnet, dass** für die elektrische Verbindung des Ständers (26) in das Gehäuse (42) eine Spannung im Bereich von 12-24V mit Strömen zwischen 1 und 2A über ein Stromkabel (21) auf eine ständerseitige Klinkenbuchse (38) oder einen ständerseitigen Klinkenstecker geschaltet ist und dass die ständerseitige Klinkenbuchse (38) oder der ständerseitige Klinkenstecker mit einem gehäuseseitigen Klinkenstecker (29) oder einer gehäuseseitigen Klinkenbuchse elektrisch leitfähig verrastet, gegen Verkantung gesichert und drehbar verbunden ist.

4. Luftreinigungsvorrichtung (1) nach Anspruch 3, **dadurch gekennzeichnet,**
**dass** die elektrische Kupplungsverbindung zwischen der Klinkenbuchse (38) und dem Klinkenstecker (29) schwimmend gelagert ist.

5. Luftreinigungsvorrichtung (1) nach Anspruch 4, **dadurch gekennzeichnet,**
**dass** die schwimmende Lagerung aus einem ständerseitig in einer mehrfach abgebogenen Profilfeder (39) gelagerten Isolierteil (36) besteht, in dem der eine Teil der Klinken-Stecker-Verbindung (29, 38) angeordnet ist.

6. Luftreinigungsvorrichtung (1) nach einem der Ansprüche 1 bis 5, **dadurch gekennzeichnet, dass** die Stromzuführung über ein Stromkabel (21) erfolgt, welches in einem Kabelkanal (37) des Ständers befestigt ist.

7. Luftreinigungsvorrichtung (1) nach einem der Ansprüche 1 bis 6, **dadurch gekennzeichnet, dass** die Rastverbindung (13) als Steck-Rastverbindung oder als Bajonett-Rastverbindung ausgebildet ist.

8. Luftreinigungsvorrichtung (1) nach einem der Ansprüche 1 bis 7, **dadurch gekennzeichnet, dass** das Gehäuse (42) der Luftreinigungsvorrichtung (1) etwa scheibenförmig rund oder oval oder mehreckig ausgebildet ist.

9. Luftreinigungsvorrichtung (1) nach einem der Ansprüche 1 bis 8, **dadurch gekennzeichnet, dass** das Gehäuse (42) diskusförmig ausgebildet ist und dass der Lufteinsaugbereich (5) und der Luftausblasbereich (44) in der gleichen radialen Ebene (45) am Umfang des Gehäuses (42) angeordnet sind.

10. Luftreinigungsvorrichtung (1) nach einem der Ansprüche 1 bis 9, **dadurch gekennzeichnet, dass** der Lufteinsaugbereich (5) und/oder der Luftausblasbereich (44), von der Mittenquerachse des Gehäuses (42) und damit von der Rotationsachse des im Gehäuse (42) angeordneten Radialventilator aus gesehen, am radial äußeren Rand des Gehäuses (42) im Bereich einer am Außenumfang umlaufenden Ringnut (40) angeordnet sind.

11. Luftreinigungsvorrichtung (1) nach einem der Ansprüche 1 bis 10, **dadurch gekennzeichnet, dass** der Ständer (26) als Tischständer oder als Bodenständer oder als Klemmständer für die Befestigung an einem Autositz ausgebildet ist.

## Claims

1. Air purification device (1) for personalised supply of air to an individual user having a housing (42), which has at least one air intake region (5) for taking air into the housing (42) and at least one air blow-out region (44) for blowing the purified air out from the housing (42) by means of a fan, wherein a blow-out air stream (17) purified by a filter is directed against the body and in particular against the face of a user, wherein the air purification device (1) is designed as a table-top unit or as a floor unit or as a wall unit and in that the housing (42) with a housing dish (20) is coupled laterally to a stand (26), **characterised in that** for mechanical tool-free connection of stand (26) and housing (42), a housing-side snap-in sleeve (19) is locked with a stand-side snap-in cover (23) and **in that** for electrical connection between stand and housing, a rotational current connecter is arranged concentrically to the snap-in sleeve (19) which supplies the housing with current.

2. Air purification device (1) according to claim 1, **characterised in that** the housing (42) is rotationally symmetrical and consists of two housing dishes (20) and **in that** the housing-side connection of the stand (26) is effected in the region of a central middle axis of one of the two housing dishes (20) of the housing (42).

3. Air purification device (1) according to one of claims 1 or 2, **characterised in that** for electrical connection of the stand (26) into the housing (42), a voltage in the range from 12-24 V with currents between 1 and 2 A is switched via a power cable (21) to a stand-side jack bush (38) or a stand-side jack plug and **in that** the stand-side jack bush (38) or the stand-side jack plug is locked to be electrically conductive with a housing-side jack plug (29) or a housing-side jack bush, secured against tilting and connected to be rotatable.

4. Air purification device (1) according to claim 3, **characterised in that** the electrical coupling connection is mounted to be floating between the jack bush (38) and the jack plug (29).

5. Air purification device (1) according to claim 4, **characterised in that** floating mounting consists of an insulating part (36) mounted on the stand side in a profile spring (39) bent several times and in which the one part of the jack plug connection (29, 38) is arranged.

6. Air purification device (1) according to one of claims 1 to 5, **characterised in that** the current supply is effected via a power cable (21) which is attached in a cable channel (37) of the stand.

7. Air purification device (1) according to one of claims 1 to 6, **characterised in that** the snap-in connection (13) is designed as a plug snap-in connection or as a bayonet snap-in connection.

8. Air purification device (1) according to one of claims 1 to 7, **characterised in that** the housing (42) of the air purification device (1) is designed approximately in the form of a round or oval or polygonal disc.

9. Air purification device (1) according to one of claims 1 to 8, **characterised in that** the housing (42) is designed like a discus and **in that** the air intake region (5) and the air blow-out region (44) are arranged in the same radial plane (45) on the circumference of the housing (42).

10. Air purification device (1) according to one of claims 1 to 9, **characterised in that** the air intake region (5) and/or the air blow-out region (44), seen from the middle transverse axis of the housing (42) and hence from the rotational axis of the radial ventilator arranged in the housing (42), are arranged on the radially outer edge of the housing (42) in the region of an annular groove (40) running around the outer circumference.

11. Air purification device (1) according to one of claims 1 to 10, **characterised in that** the stand (26) is designed as a table-top stand or as a floor stand or as a clamp stand for attachment to a car seat.

## Revendications

1. Dispositif de purification d'air (1) pour l'amenée personnalisée d'air à un utilisateur individuel, avec un boîtier (42) qui comporte au moins une zone d'aspiration d'air (5) pour aspirer de l'air dans le boîtier (42) et au moins une zone d'évacuation d'air (44) pour éjecter l'air purifié du boîtier (42) à l'aide d'une soufflante, dans lequel un courant d'air d'éjection (17) purifié à travers un filtre est dirigé vers le corps et en particulier vers le visage d'un utilisateur, dans lequel le dispositif de purification d'air (1) est formé comme un appareil pour table ou comme un appareil pour sol ou comme un appareil pour paroi, et en ce que le boîtier (42) avec une coque de boîtier (20) est couplé latéralement à un support (26), **caractérisé en ce que** pour la liaison mécanique sans outil du support (26) et du boîtier (42), un manchon d'encliquetage côté boîtier (19) est encliqueté avec un couvercle d'encliquetage côté support (23) et **en ce que** pour la liaison électrique entre le support et le boîtier, un raccord électrique à rotation qui alimente le boîtier en courant est disposé concentriquement par rapport au manchon d'encliquetage (19).

2. Dispositif de purification d'air (1) selon la revendication 1, **caractérisé en ce que** le boîtier (42) présente une symétrie de révolution et se compose de deux coques de boîtier (20), et **en ce que** le raccordement côté boîtier du support (26) se fait dans la zone d'un axe médian central de l'une des deux coques de boîtier (20) du boîtier (42).

3. Dispositif de purification d'air (1) selon l'une des revendications 1 ou 2, **caractérisé en ce que** pour la liaison électrique du support (26) dans le boîtier (42), une tension dans la plage de 12-24 V avec des courants entre 1 et 2 A est amenée par un câble électrique (21) sur une prise jack côté support (38) ou sur une fiche jack côté support, et **en ce que** la prise jack côté support (38) ou la fiche jack côté support (39) est encliquetée de manière conductrice d'électricité avec une fiche jack côté boîtier (39) ou avec une prise jack côté boîtier, est bloquée à l'encontre d'un basculement et est reliée à rotation.

4. Dispositif de purification d'air (1) selon la revendication 3, **caractérisé en ce que** la liaison de couplage électrique entre la prise jack (38) et la fiche jack (39) est montée de manière flottante.

5. Dispositif de purification d'air (1) selon la revendication 4, **caractérisé en ce que** le montage flottant se compose d'un élément isolant (36) monté côté support dans un ressort profilé (39) recourbé plusieurs fois dans lequel l'un des éléments de la liaison par jack (29, 38) est disposé.

6. Dispositif de purification d'air (1) selon l'une des revendications 1 à 5, **caractérisé en ce que** l'amenée de courant se fait par un câble électrique (21) qui est fixé dans une conduite de câble (37) du support.

7. Dispositif de purification d'air (1) selon l'une des revendications 1 à 6, **caractérisé en ce que** la liaison à encliquetage (13) est formée comme une liaison à encliquetage enfichable ou comme une liaison à encliquetage à baïonnette.

8. Dispositif de purification d'air (1) selon l'une des revendications 1 à 7, **caractérisé en ce que** le boîtier (42) du dispositif de purification d'air (1) a à peu près la forme d'une plaque ronde ou ovale ou polygonale.

9. Dispositif de purification d'air (1) selon l'une des revendications 1 à 8, **caractérisé en ce que** le boîtier (42) est discoïdal et **en ce que** la zone d'aspiration d'air (5) et la zone d'évacuation d'air (44) sont disposées dans le même plan radial (45) sur la circonférence du boîtier (42).

10. Dispositif de purification d'air (1) selon l'une des revendications 1 à 9, **caractérisé en ce que** la zone d'aspiration d'air (5) et/ou la zone d'évacuation d'air (44), vues de l'axe transversal médian du boîtier (42) et, ainsi, de l'axe de rotation du ventilateur radial disposé dans le boîtier (42), sont disposées sur le bord radialement extérieur du boîtier (42) dans la zone d'une rainure annulaire (40) s'étendant sur la circonférence extérieure.

11. Dispositif de purification d'air (1) selon l'une des revendications 1 à 10, **caractérisé en ce que** le support (26) est formé comme un support pour table ou comme un support pour sol ou comme un support à serrage pour la fixation à un siège de voiture.
